# EUROPÄISCHE PATENTSCHRIFT

(11) **EP 2 847 487 B1**
(45) Veröffentlichungstag und Bekanntmachung des Hinweises auf die Patenterteilung: **13.03.2019**
(21) Anmeldenummer: 13723427.4
(22) Anmeldetag: 25.04.2013
(51) Int. Cl.: B60G 11/27, F16F 9/38, F16F 9/04

(54) **LUFTFEDER UND VERFAHREN ZUM UMSCHLAGEN EINES LUFTFEDERBALGES EINER LUFTFEDER**
AIR SPRING AND METHOD FOR TURNING UP AN AIR SPRING BELLOWS OF AN AIR SPRING
RESSORT PNEUMATIQUE ET PROCÉDÉ POUR LE RABATTEMENT D'UN SOUFFLET AMORTISSEUR PNEUMATIQUE D'UN RESSORT PNEUMATIQUE

(30) Priorität: 08.05.2012 DE 102012207606; 07.03.2013 DE 102013203887
(43) Veröffentlichungstag der Anmeldung: 18.03.2015
(73) Patentinhaber: Continental Teves AG & Co. OHG, 60488 Frankfurt am Main (DE)
(72) Erfinder: GLEU, Jens Uwe, 30855 Langenhagen (DE); WEHAUS, Holger, 30449 Hannover (DE)
(86) Internationale Anmeldenummer: PCT/EP2013/058615
(87) Internationale Veröffentlichungsnummer: WO 2013/167390

(56) Entgegenhaltungen:
- EP-A1- 2 330 313
- EP-A2- 0 262 080
- US-A- 2 933 308
- US-A- 4 921 226
- US-A1- 2005 258 579
- US-A1- 2006 012 089

## Beschreibung

Die Erfindung betrifft eine Luftfeder für Fahrwerke von Fahrzeugen, die mit einem Luftfederkolben und einem Luftfederdeckel zwischen Fahrwerk und Fahrzeugkarosserie eines Kraftfahrzeuges eingespannt ist, mit einem Luftfederbalg aus elastomerem Material, welcher einen mit Druckluft gefüllten Arbeitsraum wenigstens teilweise begrenzt und der unter Ausbildung wenigstens einer Rollfalte an dem Luftfederkolben abrollt, wobei der Luftfederbalg mittels Klemmelementen mit einem ersten Ende an dem Luftfederdeckel und mit einem zweiten Ende an dem Luftfederkolben befestigt ist, mit einer am Luftfederbalg befestigten und zu dem Luftfederdeckel beabstandeten Außenführung, welche derart an dem Luftfederbalg befestigt ist, dass ein Teilstück des Luftfederbalges zwischen dem Luftfederdeckel und der Außenführung als Kardanikfalte ausgebildet ist, welche eine durch senkrecht zur Achse des Luftfederbalges wirkende Kräfte erzeugte Auslenkung des Luftfederbalges ermöglicht. Ferner betrifft die Erfindung ein Verfahren zum Umschlagen eines Luftfederbalges einer Luftfeder

Luftfedereinrichtungen, auch kurz Luftfedern genannt, die zwischen Fahrwerk und Karosserie eingespannt sind und einen Luftfederbalg aufweisen, der wiederum zwischen den Luftfederbauteilen Luftfederdeckel und Luftfederkolben befestigt ist, sind in einer Vielzahl von Ausführungen bekannt. Die Luftfeder steht im Betrieb unter einem inneren Überdruck. Der Luftfederbalg rollt unter Last und bei Federbewegungen unter Bildung einer Rollfalte auf der Außenkontur wenigstens eines konzentrischen Luftfederkolbens ab. Eine derartige Luftfeder wird häufig in Straßen- oder Schienenfahrzeugen eingesetzt, um eine komfortable Federung zu erreichen.

Dabei existieren sowohl Luftfedern, bei denen der Luftfederbalg nur einseitig eine Rollfalte bildet, nämlich in der Regel auf dem Luftfederkolben, als auch Luftfedern, bei denen der Luftfederbalg unter Bildung einer beidseitigen (Roll-) Falte zwischen Luftfederdeckel und Luftfederkolben eingespannt ist. Luftfedern mit einseitiger Rollfalte sind in der Regel in Pkw's zu finden, während die oft größeren und tragfähigeren Luftfedern mit beidseitiger Rollfalte eher in LKW's und Schienenfahrzeuge eingebaut werden.

Um ein gutes Harshness- und ein komfortables FederungsVerhalten zu erzielen, werden dünne Luftfederbälge eingesetzt, welche üblicherweise als gewebeverstärkte Gummibälge hergestellt werden. Ferner kann die Luftfeder hierfür mit einer Außenführung versehen werden, welche den Luftfederbalg als Stützkörper umgibt.

Zur Anbindung/Klemmung der Außenführung auf dem Luftfederbalg gibt es im Wesentlichen zwei Möglichkeiten. Zum einen kann die Klemmung der Außenführung von außen auf einem inneren Klemmring erfolgen. Zum Anderen ist die Klemmung der Außenführung durch einen äußeren Klemmring über ein Stützelement möglich. Eine derartige Klemmung der Außenführung ist beispielsweise aus der EP 1 144 210 B1 bekannt. Gemäß der EP 1 144 210 B1 ist neben dem Luftfederbalg ein äusseres Stützlager aus einem textilen, elastomeren oder thermoplastischen Werkstoff vorgesehen, welches mittels eines Klemmringes am-oberen Ende der Außenführung befestigt ist. Dieses Stützlager soll sowohl die axiale Bewegung der Außenführung als auch das radiale Ausdehnen des Luftfederbalges in der Kardanikfalte begrenzen, dabei aber die kardanische Bewegung zulassen.

Weiterhin ist aus der EP 2 330 313 A1 eine Luftfeder bekannt, bei welcher ein Luftfederbalg von einer Außenführung umgeben ist und dieser am Luftfederdeckel eingespannt ist. Der Luftfederbalg bildet einen unbestimmten Umschlag um den Klemmring beziehungsweise um die Klemmung des Luftfederbalges am Luftfederdeckel und ist in seiner Länge soweit zurückgestülpt, das er mittels eines weiteren Klemmelements an der Außenführung befestigt ist.

Der Erfindung liegt die Aufgabe zugrunde, eine verbesserte und vereinfachte Anbindung der Außenführung an dem Luftfederbalg sowie ein geeignetes Verfahren zum Umschlagen des Luftfederbalges bereitzustellen.

Die der Erfindung zugrunde liegende Aufgabe wird mit den Merkmalen des unabhängigen Patentanspruchs 1 gelöst. Bevorzugte Ausführungsformen der Erfindung sind in den abhängigen Patentansprüchen angegeben.

Erfindungsgemäß weist der Luftfederbalg an dem ersten Ende einen Lagenumschlag auf, der in einer solchen Länge zurückgestülpt ist, dass der Lagenumschlag nach Zusammenbau der Luftfeder die Außenführung mit einer Überdeckung teilweise überdeckt, und die Außenführung ist im Bereich der Überdeckung des Lagenumschlages an dem Luftfederbalg mittels eines äußeren Klemmelementes befestigt. Der Vorteil dieser Anordnung ergibt sich aus dem fehlenden inneren Klemmring und somit der Möglichkeit die komplette Außenführungslänge innen als Abrolllänge für den Luftfederbalg zu nutzen. Ferner begrenzt der Lagenumschlag die radiale Ausdehnung des Luftfederbalges, ohne dass ein zusätzliches Bauteil vorgesehen werden muss.

Um das Umschlagen des Luftfederbalges zu vereinfachen, sind erfindungsgemäss Mittel vorgesehen, welche ein Umschlagen des Luftfederbalges an einer definierten Stelle ermöglichen.

Gemäß einer vorteilhaften Ausführung der Erfindung weist der Luftfederbalg eine Soll-Knickstelle auf, an welcher das Umschlagen erfolgt. Dabei kann die Soll-Knickstelle beispielsweise als umlaufende Innennut des Luftfederbalges vorgesehen sein.

Vorzugsweise weist die umlaufende Innennut eine Tiefe von höchstens einer halben Balgdicke auf, wodurch gewährleistet werden kann, dass der Lagenumschlag mit dem Luftfederbalg verbunden bleibt.

Eine alternative Ausführungsform der Erfindung sieht vor, dass auf einer Außenseite des Luftfederbalges ein Ring positioniert vorgesehen ist, um welchen das Umschlagen des Luftfederbalges erfolgt.

Gemäß einer vorteilhaften Ausführungsform der Erfindung erfolgt der Lagenumschlag in einfacher Weise vor dem Vulkanisieren eines Balg-Rohlinges des Luftfederbalges und der Lagenumschlag ist zur Verbesserung der Festigkeit im Bereich der Luftfederdeckel-Klemmung an den Luftfederbalg anvulkanisiert vorgesehen.

Vorteilhafterweise ist zwischen dem Luftfederbalg und dem Lagenumschlag im Bereich der Überdeckung ein Trennelement angeordnet. Hierdurch kann sichergestellt werden, dass die beiden Lagen des Luftfederbalges ausschließlich im Bereich der Luftfederdeckel-Klemmung zusammen vulkanisiert werden.

Gemäß einer vorteilhaften Ausführungsform der Erfindung ist als Trennelement eine Trennfolie aus Teflon vorgesehen.

Eine alternative vorteilhafte Ausführungsform der Erfindung sieht vor, dass der Lagenumschlag nach dem Vulkanisieren eines Balg-Rohlinges des Luftfederbalges erzeugt ist, wodurch kein Trennelementes zwischen dem Lagenumschlag und dem Luftfederbalg erforderlich ist.

Die erfindungsgemäße Aufgabe wird weiter durch ein Verfahren zum Umschlagen eines Luftfederbalges einer Luftfeder für Fahrwerke von Fahrzeugen gemäß dem Patentanspruch 10 gelöst.

Erfindungsgemäß ist vorgesehen, dass ein Lagenumschlag an dem ersten Ende des Luftfederbalges in einer solchen Länge zurückgestülpt wird, dass der Lagenumschlag nach Zusammenbau der Luftfeder die Außenführung mit einer Überdeckung teilweise überdeckt, und die Außenführung im Bereich der Überdeckung des Lagenumschlages an dem Luftfederbalg mittels eines äußeren Klemmelementes befestigt ist.

Weitere Merkmale, Vorteile und Anwendungsmöglichkeiten der Erfindung gehen aus den Unteransprüchen und der nachfolgenden Beschreibung von Ausführungsbeispielen sowie anhand der Zeichnung hervor. Es zeigt jeweils stark schematisiert sowie im Schnitt:
- Figur 1a:: einen Ausschnitt eines ersten Ausführungsbeispiels einer nicht erfindungsgemäßen Luftfeder;
- Figur 1b:: einen umgebuckten Luftfederbalg der Luftfeder gemäß Fig. 1a;
- Figur 2a:: einen Ausschnitt eines zweiten Ausführungsbeispiels einer nicht erfindungsgemäßen Luftfeder;
- Figur 2b:: einen vulkanisierten Luftfederbalg der Luftfeder gemäß Fig. 2a;
- Figur 2c:: einen umgebuckten Luftfederbalg der Luftfeder gemäß Fig. 2a und 2b;
- Figur 3a:: einen Ausschnitt eines ersten Ausführungsbeispiels einer erfindungsgemäßen Luftfeder;
- Figur 3b:: einen Luftfederbalg der Luftfeder gemäß Fig. 3a;
- Figur 3c:: einen umgebuckten Luftfederbalg der Luftfeder gemäß Fig. 3a und 3b und
- Figur 4:: einen Ausschnitt eines zweiten Ausführungsbeispiels einer erfindungsgemäßen Luftfeder.

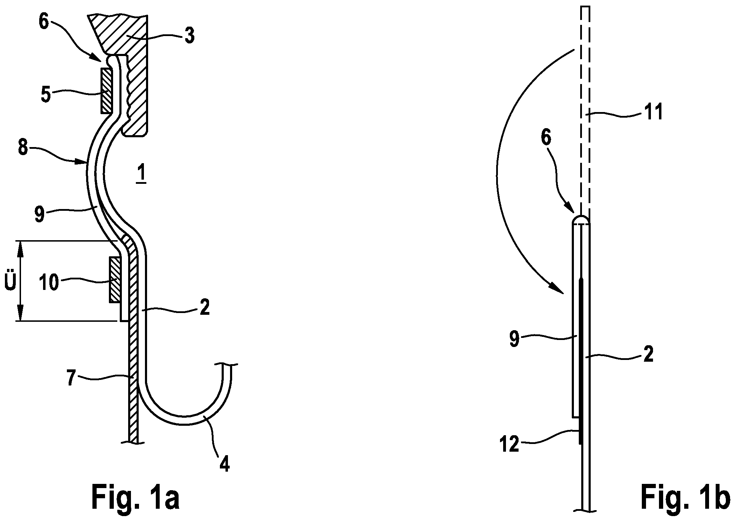

Fig. 1a zeigt einen Ausschnitt eines ersten nicht erfindungsgemässen Ausführungsbeispiels einer Luftfeder, die mit einem nicht gezeigten Luftfederkolben und einem Luftfederdeckel 3 zwischen Fahrwerk und Fahrzeugkarosserie eines Kraftfahrzeuges eingespannt ist.

Die Luftfeder weist einen Luftfederbalg 2 aus elastomerem Material auf, welcher einen mit Druckluft gefüllten Arbeitsraum 1 wenigstens teilweise begrenzt und der unter Ausbildung wenigstens einer Rollfalte 4 an dem Luftfederkolben abrollt.

Der Luftfederbalg 2 ist mittels Klemmelementen 5 mit einem ersten Ende 6 an dem Luftfederdeckel 3 und mit einem zweiten Ende an dem Luftfederkolben befestigt.

Weiter ist zur Verbesserung des Harshness- und FederungsVerhalten eine am Luftfederbalg 2 befestigte und zu dem Luftfederdeckel 3 beabstandete Außenführung 7 vorgesehen, welche derart an dem Luftfederbalg 2 befestigt ist, dass ein Teilstück des Luftfederbalges 2 zwischen dem Luftfederdeckel 3 und der Außenführung 7 als Kardanikfalte 8 ausgebildet ist. Diese ermöglicht eine durch senkrecht zur Achse des Luftfederbalges 2 wirkende Kräfte erzeugte Auslenkung des Luftfederbalges 2.

Um die Anbindung der Außenführung 7 an dem Luftfederbalg 2 zu vereinfachen, weist der Luftfederbalg 2 an dem ersten Ende 6 einen Lagenumschlag 9 auf, der in einer solchen Länge zurückgestülpt ist, dass der Lagenumschlag 9 nach Zusammenbau der Luftfeder die Außenführung 7 mit einer Überdeckung Ü teilweise überdeckt. Die Außenführung 7 ist, wie Fig. 1a zeigt, im Bereich der Überdeckung Ü des Lagenumschlages 9 an dem Luftfederbalg 2 mittels eines äußeren Klemmelementes 10 in Form eines Klemmringes befestigt. Der Vorteil dieser Anordnung ergibt sich aus der Möglichkeit die komplette Außenführungslänge innen als Abrolllänge für den Luftfederbalg 2 zu nutzen. Es wird weder ein innerer Klemmring noch ein äußeres Stützlager benötigt, sondern der umgelegte Luftfederbalg 2 kann als axial und radial begrenzendes Element verwendet werden.

Fig. 1b zeigt in teilweise gestrichelter Darstellung den Balg-Rohling 11 des Luftfederbalges vom dem Umlegen des Lagenumschlages 9. Wie durch den Pfeil angedeutet, wird das obere Balgende des Balg-Rohlings 11 in einfacher Weise vor der Vulkanisation nach außen umgelegt, d.h. umgebuckt und nach der Vulkanisation zu einer entsprechenden Länge abgelängt, was durch die gestrichelte Linie am Ende 6 des umgebuckten Luftfederbalges 2 angedeutet ist.

Um die Festigkeit des Luftfederblages 2 im Bereich der Luftfederdeckel-Klemmung zu verbessern, ist der Lagenumschlag 9 in diesem Bereich an den Luftfederbalg 3 anvulkanisiert.

Damit die Überdeckung Ü des Lagenumschlages 9 über die Außenführung 7 gezogen werden kann, ist während der Vulkanisation sicherzustellen, dass die Lagen des Luftfederbalges 2 wenigstens in diesem Bereich nicht zusammen vulkanisiert wurden. Dies kann mit einem Trennelement 12 beispielsweise in Form einer Teflonfolie realisiert werden, welche zwischen dem Luftfederbalg 2 und dem Lagenumschlag 9 im Bereich der Überdeckung Ü angeordnet ist.

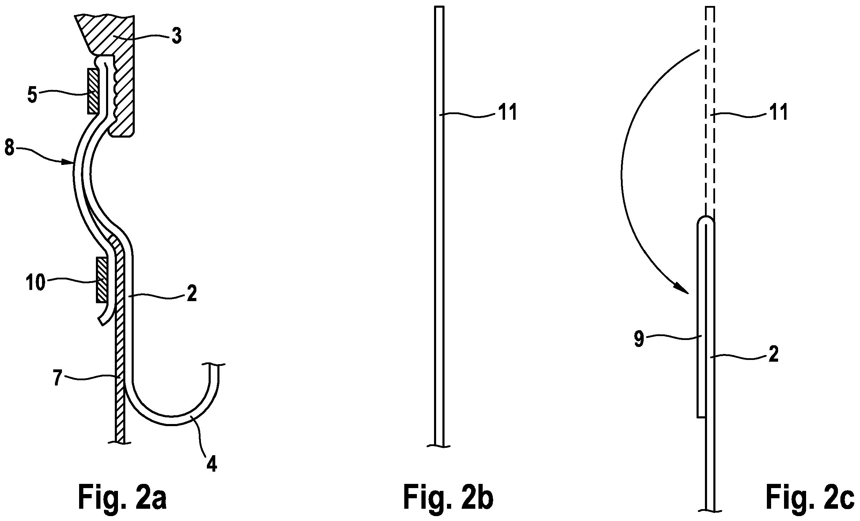

Den Fig. 2a, 2b und 2c sind ein zweites nicht erfindungsgemässes Ausführungsbeispiel zu entnehmen. Diese alternative Ausführungsform sieht vor, dass der Lagenumschlag 9 nach dem Vulkanisieren des Balg-Rohlings 11 erzeugt wird, wodurch kein Trennelement zwischen dem Lagenumschlag 9 und dem Luftfederbalg 2 erforderlich ist. Die Befestigung der Außenführung 7 erfolgt auch hier vorteilhafterweise wie zum ersten Ausführungsbeispiel beschrieben.

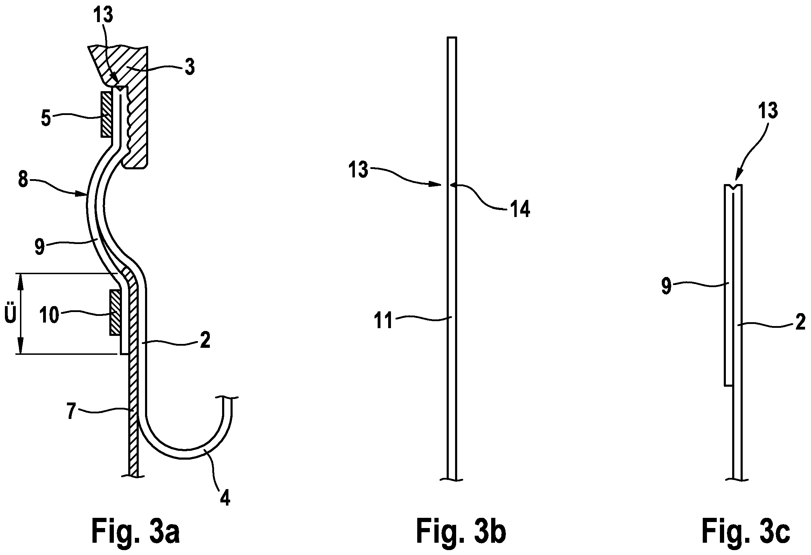

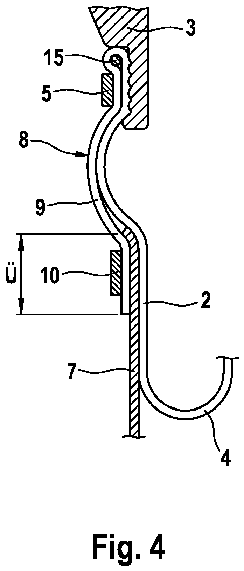

Um das Umschlagen des Luftfederbalges 2 zu vereinfachen, können folgende Verfahren zum Umschlagen durchgeführt werden, welche an den erfindungsgemässen Ausführungsbeispielen gemäß den Fig. 3a bis 4 beschrieben werden. Beide Verfahren können bei den vorstehend beschriebenen Ausführungsformen Anwendung finden.

Fig. 3a zeigt einen Ausschnitt eines ersten Ausführungsbeispiels einer Luftfeder. Im Unterschied zu den ersten beiden nicht erfindungsgemässen Ausführungsformen sind hierbei Mittel vorgesehen, welche ein Umschlagen des Luftfederbalges 2 an einer definierten Stelle ermöglichen.

Konkret sind die Mittel als Soll-Knickstelle 13 vorgesehen, an welcher das Umschlagen des Luftfederbalges 2 erfolgt. Wie Insbesondere aus Fig. 3b ersichtlich ist, welche den noch nicht umgeschlagenen Balg-Rohling 11 zeigt, kann die Soll-Knickstelle 13 beispielsweise als umlaufende Innennut 14 des Luftfederbalges vorgesehen sein, die eine Tiefe von höchstens einer halben Balgdicke aufweist, um zu gewährleisten, dass der Lagenumschlag 9 mit dem Luftfederbalg 2 verbunden bleibt.

Gemäß einem zweiten Ausführungsbeispiel erfolgt das Umschlagen des Luftfederbalges 2 um einen Ring 14, welcher auf einer Außenseite des Luftfederbalges 2 positioniert ist und somit ebenfalls ein einfaches Umschlagen des Luftfederbalges 2 an einer definierten Stelle ermöglicht.

### Bezugszeichenliste

- 1: Arbeitsraum
- 2: Luftfederbalg
- 3: Luftfederdeckel
- 4: Rollfalte
- 5: Klemmelement
- 6: Ende
- 7: Außenführung
- 8: Kardanikfalte
- 9: Lagenumschlag
- 10: Klemmelement
- 11: Balg-Rohling
- 12: Trennelement
- 13: Soll-Knickstelle
- 14: Innennut
- 15: Ring

## Patentansprüche

1. Luftfeder für Fahrwerke von Fahrzeugen, die mit einem Luftfederkolben und einem Luftfederdeckel (3) zwischen Fahrwerk und Fahrzeugkarosserie eines Kraftfahrzeuges eingespannt ist,
- mit einem Luftfederbalg (2) aus elastomerem Material, welcher einen mit Druckluft gefüllten Arbeitsraum (1) wenigstens teilweise begrenzt und der unter Ausbildung wenigstens einer Rollfalte (4) an dem Luftfederkolben abrollt, wobei der Luftfederbalg (2) mittels Klemmelementen (5) mit einem ersten Ende (6) an dem Luftfederdeckel (3) und mit einem zweiten Ende an dem Luftfederkolben befestigt ist,
- mit einer am Luftfederbalg (2) befestigten und zu dem Luftfederdeckel (3) beabstandeten Außenführung (7), welche derart an dem Luftfederbalg (2) befestigt ist, dass ein Teilstück des Luftfederbalges (2) zwischen dem Luftfederdeckel (3) und der Außenführung (7) als Kardanikfalte (8) ausgebildet ist, welche eine durch senkrecht zur Achse des Luftfederbalges (2) wirkende Kräfte erzeugte Auslenkung des Luftfederbalges (2) ermöglicht,
- wobei der Luftfederbalg (2) an dem ersten Ende (6) einen Lagenumschlag (9) aufweist, der in einer solchen Länge zurückgestülpt ist, dass der Lagenumschlag (9) nach Zusammenbau der Luftfeder die Außenführung (7) mit einer Überdeckung (Ü) teilweise überdeckt, und die Außenführung (7) im Bereich der Überdeckung (Ü) des Lagenumschlages (9) an dem Luftfederbalg (2) mittels eines äußeren Klemmelementes (10) befestigt ist, **dadurch gekennzeichnet, dass** Mittel vorgesehen sind, welche ein Umschlagen des Luftfederbalges (2) an einer definierten Stelle ermöglichen.

2. Luftfeder nach Anspruch 1, **dadurch gekennzeichnet, dass** der Luftfederbalg (2) eine Soll-Knickstelle (13) aufweist, an welcher das Umschlagen erfolgt.

3. Luftfeder nach Anspruch 2, **dadurch gekennzeichnet, dass** die Soll-Knickstelle (13) als umlaufende Innennut (14) des Luftfederbalges (2) vorgesehen ist.

4. Luftfeder nach Anspruch 3, **dadurch gekennzeichnet, dass** die umlaufende Innennut (14) eine Tiefe von höchstens einer halben Balgdicke aufweist.

5. Luftfeder nach Anspruch 1, **dadurch gekennzeichnet, dass** auf einer Außenseite des Luftfederbalges (2) ein Ring (15) positioniert vorgesehen ist, um welchen das Umschlagen des Luftfederbalges (2) erfolgt.

6. Luftfeder nach einem der vorangegangenen Ansprüche 1 bis 5, **dadurch gekennzeichnet, dass** der Lagenumschlag (9) vor dem Vulkanisieren eines Balg-Rohlinges (11) des Luftfederbalges (2) erfolgt und der Lagenumschlag (9) im Bereich der Luftfederdeckel-Klemmung an den Luftfederbalg (2) anvulkanisiert vorgesehen ist.

7. Luftfeder nach Anspruch 6, **dadurch gekennzeichnet, dass** zwischen dem Luftfederbalg (2) und dem Lagenumschlag (9) im Bereich der Überdeckung (Ü) ein Trennelement (12) angeordnet ist.

8. Luftfeder nach Anspruch 7, **dadurch gekennzeichnet, dass** als Trennelement (12) eine Trennfolie aus Teflon vorgesehen ist.

9. Luftfeder nach einem der vorangegangenen Ansprüche 1 bis 5, **dadurch gekennzeichnet, dass** der Lagenumschlag (9) nach dem Vulkanisieren eines Balg-Rohlinges (11) des Luftfederbalges erzeugt ist.

10. Verfahren zum Umschlagen eines Luftfederbalges (2) einer Luftfeder für Fahrwerke von Fahrzeugen, wobei der Luftfederbalg (2) mittels Klemmelementen (5) mit einem ersten Ende (6) an einem Luftfederdeckel (3) und mit einem zweiten Ende an dem Luftfederkolben befestigt ist, und eine zu dem Luftfederdeckel (3) beabstandeten Außenführung derart an dem Luftfederbalg (2) befestigt ist, dass ein Teilstück des Luftfederbalges (2) zwischen dem Luftfederdeckel (3) und der Außenführung (7) als Kardanikfalte (8) ausgebildet ist, welche eine durch senkrecht zur Achse des Luftfederbalges (2) wirkende Kräfte erzeugte Auslenkung des Luftfederbalges (2) ermöglicht, wobei ein Lagenumschlag (9) an dem ersten Ende (6) des Luftfederbalges (2) in einer solchen Länge zurückgestülpt wird, dass der Lagenumschlag (9) nach Zusammenbau der Luftfeder die Außenführung (7) mit einer Überdeckung (Ü) teilweise überdeckt, und die Außenführung (7) im Bereich der Überdeckung (Ü) des Lagenumschlages (9) an dem Luftfederbalg (2) mittels eines äußeren Klemmelementes (10) befestigt ist, **dadurch gekennzeichnet, dass** Mittel vorgesehen sind welche das Umschlagen des Luftfederbalges (2) an einer definierten Stelle ermöglichen.

11. Verfahren zum Umschlagen eines Luftfederbalges (2) nach Anspruch 10, **dadurch gekennzeichnet, dass** das Umschlagen des Luftfederbalges (2) an einer Soll-Knickstelle (13) erfolgt.

12. Verfahren zum Umschlagen eines Luftfederbalges (2) nach Anspruch 11, **dadurch gekennzeichnet, dass** in den Luftfederbalg (2) als Soll-Knickstelle eine umlaufende Innennut (14) eingebracht wird.

13. Verfahren zum Umschlagen eines Luftfederbalges (2) nach Anspruch 10, **dadurch gekennzeichnet, dass** auf einer Außenseite des Luftfederbalges (2) ein Ring (15) positioniert wird, um welchen das Umschlagen des Luftfederbalges (2) erfolgt.

14. Verfahren zum Umschlagen eines Luftfederbalges (2) nach einem der vorangegangenen Ansprüche 10 bis 13, **dadurch gekennzeichnet, dass** der Lagenumschlag (9) vor dem Vulkanisieren eines Balg-Rohlinges (11) des Luftfederbalges (2) erfolgt und der Lagenumschlag (9) im Bereich der Luftfederdeckel-Klemmung an den Luftfederbalg (2) anvulkanisiert wird, wobei zwischen dem Luftfederbalg (2) und dem Lagenumschlag (9) im Bereich der Überdeckung (Ü) ein Trennelement (12) angeordnet wird.

15. Verfahren zum Umschlagen eines Luftfederbalges (2) nach einem der vorangegangenen Ansprüche 10 bis 13, **dadurch gekennzeichnet, dass** der Lagenumschlag (9) nach dem Vulkanisieren eines Balg-Rohlinges (11) des Luftfederbalges erzeugt wird.

## Claims

1. Air spring for running gear assemblies of vehicles, which is clamped with an air spring piston and an air spring cover (3) between the running gear assembly and the vehicle body of a motor vehicle,
- having an air spring bellows (2) made from elastomeric material, which at least partially delimits a compressed air-filled working chamber (1) and which, forming at least one rolling fold (4), rolls on the air spring piston, wherein the air spring bellows (2) is attached by means of clamping elements (5) at a first end (6) to the air spring cover (3) and at a second end to the air spring piston,
- having an external guide (7), which is attached to the air spring bellows (2) and spaced apart from the air spring cover (3) and which is attached to the air spring bellows (2) in such a way that a partial piece of the air spring bellows (2) between the air spring cover (3) and the external guide (7) is formed as a cardanic fold (8) which permits a deflection of the air spring bellows (2) produced by forces acting perpendicular to the axis of the air spring bellows (2), wherein the air spring bellows (2) has a folded-over ply (9) at the first end (6), said folded-over ply being folded back over such a length that, after assembly of the air spring, the folded-over ply (9) partially covers the external guide (7) with an overlap (U), and the external guide (7) is attached to the air spring bellows (2) in the region of the overlap (U) of the folded-over ply (9) by means of an external clamping element (10), **characterized in that** means are provided which enable the air spring bellows (2) to be folded over at a defined point.

2. Air spring according to Claim 1, **characterized in that** the air spring bellows (2) has a predetermined bending point (13), at which the folding over takes place.

3. Air spring according to Claim 2, **characterized in that** the predetermined bending point (13) is provided as an encircling inner groove (14) in the air spring bellows (2).

4. Air spring according to Claim 3, **characterized in that** the encircling inner groove (14) has a depth of at most half the thickness of the bellows.

5. Air spring according to Claim 1, **characterized in that** a ring (15) is provided in a positioned manner on an outer side of the air spring bellows (2), and the folding over of the air spring bellows (2) takes place around said ring.

6. Air spring according to one of preceding Claims 1 to 5, **characterized in that** the folded-over ply (9) is formed before the vulcanization of a bellows blank (11) of the air spring bellows (2) and the folded-over ply (9) is provided in such a way as to be vulcanized onto the air spring bellows (2) in the region of the air spring cover clamping.

7. Air spring according to Claim 6, **characterized in that** a separating element (12) is arranged between the air spring bellows (2) and the folded-over ply (9), in the region of the overlap (U).

8. Air spring according to Claim 7, **characterized in that** a separating film made of Teflon is provided as a separating element (12).

9. Air spring according to one of preceding Claims 1 to 5, **characterized in that** the folded-over ply (9) is produced after the vulcanization of a bellows blank (11) of the air spring bellows.

10. Method for folding over an air spring bellows (2) of an air spring for running gear assemblies of vehicles, wherein the air spring bellows (2) is attached by means of clamping elements (5) at a first end (6) to an air spring cover (3) and at a second end to the air spring piston, and an external guide, which is spaced apart from the air spring cover (3) and which is attached to the air spring bellows (2) in such a way that a partial piece of the air spring bellows (2) between the air spring cover (3) and the external guide (7) is formed as a cardanic fold (8) which permits a deflection of the air spring bellows (2) produced by forces acting perpendicular to the axis of the air spring bellows (2), wherein a folded-over ply (9) at the first end (6) of the air spring bellows (2) is folded back over such a length that, after assembly of the air spring, the folded-over ply (9) partially covers the external guide (7) with an overlap (Ü), and the external guide (7) is attached to the air spring bellows (2) in the region of the overlap (U) of the folded-over ply (9) by means of an external clamping element (10), **characterized in that** means are provided which enable the air spring bellows (2) to be folded over at a defined point.

11. Method for folding over an air spring bellows (2) according to Claim 10, **characterized in that** means are provided which enable the air spring bellows (2) takes place at a predetermined bending point (13) .

12. Method for folding over an air spring bellows (2) according to Claim 11, **characterized in that** an encircling inner groove (14) is introduced into the air spring bellows (2) as the predetermined bending point (13).

13. Method for folding over an air spring bellows (2) according to Claim 10, **characterized in that** a ring (15), around which the folding over of the air spring bellows (2) takes place, is positioned on an outer side of the air spring bellows (2).

14. Method for folding over an air spring bellows (2) according to one of preceding Claims 10 to 13, **characterized in that** the folded-over ply (9) is formed before the vulcanization of a bellows blank (11) of the air spring bellows (2) and the folded-over ply (9) is vulcanized onto the air spring bellows (2) in the region of the clamping of the air spring cover, wherein a separating element (12) is arranged between the air spring bellows (2) and the folded-over ply (9), in the region of the overlap (Ü).

15. Method for folding over an air spring bellows (2) according to one of preceding Claims 10 to 13, **characterized in that** the folded-over ply (9) is produced after the vulcanization of a bellows blank (11) of the air spring bellows.

## Revendications

1. Ressort pneumatique pour trains roulants de véhicules, lequel est serré avec un piston de ressort pneumatique et un couvercle de ressort pneumatique (3) entre le train roulant et la carrosserie d'un véhicule automobile,
- comprenant un soufflet de ressort pneumatique (2) en matériau élastomère, lequel soufflet limite au moins partiellement une chambre de travail (1) remplie d'air comprimé et lequel roule sur le piston de ressort pneumatique en formant au moins un pli de roulement (4), le soufflet de ressort pneumatique (2) étant fixé, au moyen d'éléments de serrage (5), par une première extrémité (6) au couvercle de ressort pneumatique (3) et par une deuxième extrémité au piston de ressort pneumatique,
- comprenant un guide extérieur (7) fixé au soufflet de ressort pneumatique (2) et espacé du couvercle de ressort pneumatique (3), lequel guide extérieur est fixé au soufflet de ressort pneumatique (2) de telle sorte qu'une pièce partielle du soufflet de ressort pneumatique (2) est formée entre le couvercle de ressort pneumatique (3) et le guide extérieur (7) en tant que pli cardanique (8), lequel permet une déviation du soufflet de ressort pneumatique (2) produite par des forces agissant perpendiculairement à l'axe du soufflet de ressort pneumatique (2),
- le soufflet de ressort pneumatique (2) comprenant, à la première extrémité (6), un rabattement de couches (9) qui est replié sur une longueur telle qu'après l'assemblage du ressort pneumatique, le rabattement de couches (9) recouvre partiellement le guide extérieur (7) par un recouvrement (Ü), et le guide extérieur (7) étant fixé au soufflet de ressort pneumatique (2) au moyen d'un élément de serrage extérieur (10) dans la région du recouvrement (Ü) du rabattement de couches (9), **caractérisé en ce que** des moyens sont prévus, lesquels permettent un rabattement du soufflet de ressort pneumatique (2) en un point défini.

2. Ressort pneumatique selon la revendication 1, **caractérisé en ce que** le soufflet de ressort pneumatique (2) comprend un point de pliage de consigne (13) auquel le rabattement s'effectue.

3. Ressort pneumatique selon la revendication 2, **caractérisé en ce que** le point de pliage de consigne (13) est prévu en tant que rainure intérieure périphérique (14) du soufflet de ressort pneumatique (2) .

4. Ressort pneumatique selon la revendication 3, **caractérisé en ce que** la rainure intérieure périphérique (14) présente une profondeur égale au maximum à la moitié de l'épaisseur du soufflet.

5. Ressort pneumatique selon la revendication 1, **caractérisé en ce qu'**une bague (15) est prévue de manière positionnée sur un côté extérieur du soufflet de ressort pneumatique (2), bague autour de laquelle s'effectue le rabattement du soufflet de ressort pneumatique (2).

6. Ressort pneumatique selon l'une quelconque des revendications précédentes 1 à 5, **caractérisé en ce que** le rabattement de couches (9) s'effectue avant la vulcanisation d'une ébauche (11) du soufflet de ressort pneumatique (2) et le rabattement de couches (9) est prévu de manière vulcanisée sur le soufflet de ressort pneumatique (2) dans la région du serrage de couvercle de ressort pneumatique.

7. Ressort pneumatique selon la revendication 6, **caractérisé en ce qu'**un élément de séparation (12) est disposé entre le soufflet de ressort pneumatique (2) et le rabattement de couches (9) dans la région du recouvrement (Ü).

8. Ressort pneumatique selon la revendication 7, **caractérisé en ce qu'**un film de séparation en téflon est prévu en tant qu'élément de séparation (12).

9. Ressort pneumatique selon l'une quelconque des revendications précédentes 1 à 5, **caractérisé en ce que** le rabattement de couches (9) est produit après la vulcanisation d'une ébauche (11) du soufflet de ressort pneumatique.

10. Procédé de rabattement d'un soufflet de ressort pneumatique (2) d'un ressort pneumatique pour trains roulants de véhicules, le soufflet de ressort pneumatique (2) étant fixé, au moyen d'éléments de serrage (5), par une première extrémité (6) au couvercle de ressort pneumatique (3) et par une deuxième extrémité au piston de ressort pneumatique, et un guide extérieur espacé du couvercle de ressort pneumatique (3) étant fixé au soufflet de ressort pneumatique (2) de telle sorte qu'une pièce partielle du soufflet de ressort pneumatique (2) est formée entre le couvercle de ressort pneumatique (3) et le guide extérieur (7) en tant que pli cardanique (8), lequel permet une déviation du soufflet de ressort pneumatique (2) produite par des forces agissant perpendiculairement à l'axe du soufflet de ressort pneumatique (2), un rabattement de couches (9) à la première extrémité (6) du soufflet de ressort pneumatique (2) étant replié sur une longueur telle qu'après l'assemblage du ressort pneumatique, le rabattement de couches (9) recouvre partiellement le guide extérieur (7) par un recouvrement (Ü), et le guide extérieur (7) étant fixé au soufflet de ressort pneumatique (2) au moyen d'un élément de serrage extérieur (10) dans la région du recouvrement (Ü) du rabattement de couches (9), **caractérisé en ce que** des moyens sont prévus, lesquels permettent le rabattement du soufflet de ressort pneumatique (2) en un point défini.

11. Procédé de rabattement d'un soufflet de ressort pneumatique (2) selon la revendication 10, **caractérisé en ce que** le rabattement du soufflet de ressort pneumatique (2) s'effectue en un point de pliage de consigne (13).

12. Procédé de rabattement d'un soufflet de ressort pneumatique (2) selon la revendication 11, **caractérisé en ce qu'**une rainure intérieure périphérique (14) est ménagée dans le soufflet de ressort pneumatique (2) en tant que point de pliage de consigne.

13. Procédé de rabattement d'un soufflet de ressort pneumatique (2) selon la revendication 10, **caractérisé en ce qu'**une bague (15) est positionnée sur un côté extérieur du soufflet de ressort pneumatique (2), bague autour de laquelle s'effectue le rabattement du soufflet de ressort pneumatique (2) .

14. Procédé de rabattement d'un soufflet de ressort pneumatique (2) selon l'une quelconque des revendications précédentes 10 à 13, **caractérisé en ce que** le rabattement de couches (9) s'effectue avant la vulcanisation d'une ébauche (11) du soufflet de ressort pneumatique (2) et le rabattement de couches (9) est vulcanisé sur le soufflet de ressort pneumatique (2) dans la région du serrage de couvercle de ressort pneumatique, un élément de séparation (12) étant disposé entre le soufflet de ressort pneumatique (2) et le rabattement de couches (9) dans la région du recouvrement (Ü).

15. Procédé de rabattement d'un soufflet de ressort pneumatique (2) selon l'une quelconque des revendications précédentes 10 à 13, **caractérisé en ce que** le rabattement de couches (9) est produit après la vulcanisation d'une ébauche (11) du soufflet de ressort pneumatique.
